# EUROPEAN PATENT SPECIFICATION

(11) **EP 3 672 018 B1**
(45) Date of publication and mention of the grant of the patent: **22.05.2024**
(21) Application number: 19202923.9
(22) Date of filing: 14.10.2019
(51) Int. Cl.: B64G 1/42, H02J 7/00, H02J 7/35, B64G 1/44, B64G 1/40

(54) **AUTONOMOUS CONTROL OF ELECTRIC POWER CONSUMPTION BY AN APPARATUS**
AUTONOME STEUERUNG DES ELEKTRISCHEN ENERGIEVERBRAUCHS DURCH EINE VORRICHTUNG
RÉGULATION AUTONOME DE LA CONSOMMATION D'ÉNERGIE ÉLECTRIQUE PAR UN APPAREIL

(30) Priority: 20.12.2018 US 201816228000
(43) Date of publication of application: 24.06.2020
(73) Proprietor: The Boeing Company, Arlington, VA 22202 (US)
(72) Inventor: HAHN, Carl J. III, Chicago, IL 60606-1596 (US); MANSOUR, Sadek W., Chicago, IL 60606-1596 (US)
(74) Representative: Plasseraud IP

(56) References cited:
- US-A1- 2004 232 878
- US-A1- 2016 251 092
- CHETTY P R K ET AL: "TOPEX ELECTRICAL POWER SYSTEM", AEROSPACE POWER SYSTEMS. BOSTON, AUG. 4 - 9, 1991; [PROCEEDINGS OF THE INTERSOCIETY ENERGY CONVERSION ENGINEERING CONFERENCE], NEW YORK, IEEE, US, vol. 1, 4 August 1991 (1991-08-04), pages 36-44, XP000280425, ISBN: 978-0-89448-163-5

## Description

### FIELD

The present disclosure relates to spacecraft and more particularly to autonomously controlling electric power consumption by an apparatus, such as a spacecraft.

### BACKGROUND

An apparatus or spacecraft needs to provide reliable communications during times when the apparatus or spacecraft is expected to be available for communications. Complete shedding of an integrated payload array or shutdown of communications components of the apparatus or spacecraft may occur under certain circumstances. We cite as examples, a ground station exceeding an allowable bandwidth, the spacecraft or satellite performing a station-keeping maneuver at the wrong time, such as during an eclipse, a solar array degrading faster than expected, or other operations by the apparatus or spacecraft that draw more than a typical amount or expected amount of electric power and cause complete shutdown of communications by the apparatus or spacecraft. Accordingly, there is a need to autonomously control electric power usage by an apparatus, spacecraft or satellite to avoid complete shedding of the payload. US2016251092, in accordance with its abstract, states a power distribution system including a power source and a plurality of power channels which may distribute power from the power source to a plurality of systems in the small form factor satellite flight system. A processor may monitor power availability of the power source. The processor may also collect housekeeping information of the plurality of systems in the small form factor satellite flight system and may regulate the power channels based on the power availability and the housekeeping information. Chetty et al, in accordance with its abstract, states a "TOPEX ELECTRICAL POWER SYSTEM" in AEROSPACE POWER SYSTEMS, BOSTON, AUG. 4 - 9, 1991. The TOPEX carries a radar altimeter, a microwave radiometer, a laser retro-reflector array, a frequency reference unit, an experimental GPS demonstration receiver, a DORIS Doppler tracking receiver and a solid-state radar altimeter.

US2004232878, in accordance with its abstract, states a self-powered apparatus which includes a solar power cell, a battery, and a load. The load may include one or more load functions performed using power provided by one or both of the solar power cell and the battery. The inclusion of a battery permits the solar power cell to be sized much smaller than if the solar power cell was the only supply of power. A programmable controller selectively regulates power provided to one or more load functions and also selectively regulates whether one or both of the power cell and battery supplies the power. Switching circuitry, controlled by the programmable controller, selectively couples one or both of the battery and the solar cell to supply energy for powering the load. In an example embodiment, the controller couples the battery and/or solar cell to charge a super capacitor, which then is selectively controlled to power the load. The programmable controller determines and prioritizes load function power requirements, and based thereon, determines which load functions will be powered based the priority of the load function requirements and the amount of power that can be supplied by the solar power cell as supplemented by the battery.

### SUMMARY

According to the invention, a method is defined by independent claim 1. Further embodiments are defined by dependent claims 2 to 12.

According to the invention, an apparatus is defined by independent claim 13. Further embodiments are defined by dependent claims 14 and 15.

### BRIEF DESCRIPTION OF THE DRAWINGS

FIG. 1 is a schematic diagram of an example of a satellite communications system in accordance with an embodiment of the present disclosure.
FIG. 2 is a block schematic diagram of an example of an apparatus including a controller configured for autonomously controlling electric power consumption by the apparatus in accordance with an embodiment of the present disclosure.
FIG. 3 is a graph of electric power consumption illustrating an example of electric power consumption by a payload of a satellite as the satellite orbits the earth in accordance with an embodiment of the present disclosure.
FIG. 4 is a flow chart of an example of a method for autonomously controlling electric power consumption in accordance with an embodiment of the present disclosure.
FIGS. 5A and 5B are a flow chart of an example of a method for autonomously controlling electric power consumption in accordance with another embodiment of the present disclosure.
FIG. 6A is a graph of an example of monitoring a state of charge (SOC) of a battery of an apparatus or spacecraft in accordance with an embodiment of the present disclosure.
FIG. 6B is a graph of an example of monitoring electric power consumption by the apparatus or spacecraft in accordance with an embodiment of the present disclosure.
FIG. 6C is a graph of an example of monitoring electric power consumption by a payload (PL) of an apparatus or spacecraft in accordance with an embodiment of the present disclosure.
FIG. 7 is a block schematic diagram of an example of an integrated payload array including components that are selectively controlled for autonomously controlling electric power consumption in accordance with an embodiment of the present disclosure.

### DETAILED DESCRIPTION

The following detailed description of embodiments refers to the accompanying drawings, which illustrate specific embodiments of the disclosure. Other embodiments having different structures and operations do not depart from the scope of the present disclosure. Like reference numerals may refer to the same element or component in the different drawings.

The terms apparatus, satellite, spacecraft, and vehicle may be used interchangeably in the present disclosure and the present disclosure is not intended to limited by which term or terms are used.

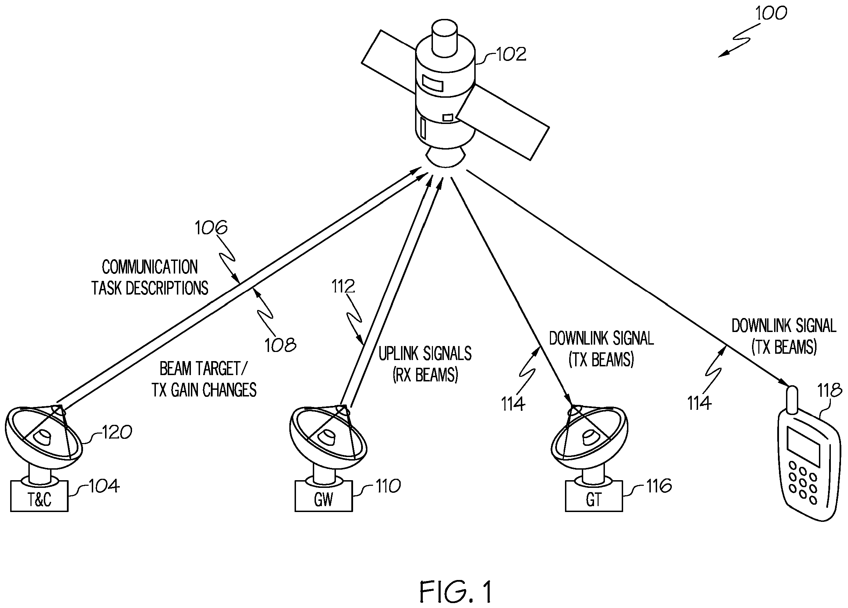

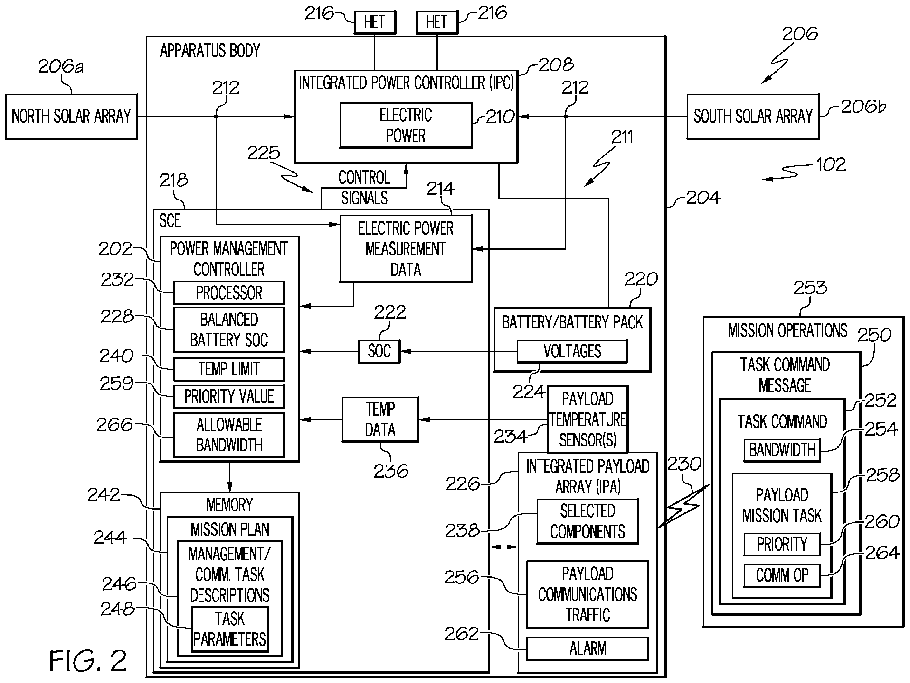

FIG. 1 is a schematic diagram of an example of a satellite communications system 100 in accordance with an embodiment of the present disclosure. The satellite communications system 100 includes an apparatus 102. In one embodiment, the apparatus 102 is a spacecraft. The satellite communications system 100 also include one or more a telemetry and control (T&C) ground stations 104. Examples of features or functions the T&C ground station 104 is configured to perform include but are not necessarily limited to allocate payload communication resources, upload communication task descriptions 106, update task parameters to maintain link performance, upload beam target changes and upload transmit gain changes 108. As described in more detail with reference to FIG. 2, management and communication task descriptions 246 are stored in a mission plan 244 in a memory 242 of the apparatus 102. The apparatus 102 autonomously executes tasks, for example, configures allocated beam channels at scheduled times on a recurring basis, dynamically steers beams based on beam targets and apparatus motion, applies real-time task parameter changes received from the T&C ground station 104 and performs other tasks associated with communications.

In accordance with an aspect, the satellite communications system 100 also includes one or more gateway (GW) ground stations 110. The GW ground stations 110 are configured to transmit uplink signals 112 that are received by the apparatus 102. The apparatus 102 is also configured to transmit downlink signals 114 to one or more fixed ground terminals 116 and mobile terminals 118.

FIG. 2 is a block schematic diagram of an example of the apparatus 102 in FIG.1. The apparatus 102 includes a controller 202. In one embodiment, the controller 202 is a power management controller. Controller 202 is configured to autonomously control electric power consumption by the apparatus 102 in accordance with an embodiment of the present disclosure. In accordance with an example, the apparatus 102 is a spacecraft. The apparatus 102 includes an apparatus body 204 and one or more solar arrays 206 attached to the apparatus body 204. The solar arrays 206 are configured to at least charge the battery 220 and provide electric power 210 to the components 211 of the apparatus 102. In the example in FIG. 2, the apparatus 102 includes a north solar array 206a and a south solar array 206b. The north solar array 206a and the south solar array 206b are mounted on opposite sides of the apparatus body 204. The north solar array 206a and the south solar array 206b are coupled to an integrated power controller (IPC) 208 to supply electric power 210 to the IPC 208. The IPC 208 receives electric power 210 from the solar arrays 206 and controls distribution of the electric power 210 to other components 211 of the apparatus 102. Electric power 210 from each of the solar arrays 206 is measured or sensed by sensing devices 212 and electric power measurement data 214 is provided to the controller 202. The controller 202 monitors the electric power measurement data 214 of the electric power 210 generated by each solar array 206a and 206b.

According to an example, two thrusters 216, such as Hall-effect thrusters (HET) or Xenon propellant thrusters, are mounted to the apparatus body 204. The amount of thrust generated by each of the thrusters 216 is proportional to an amount of electric power 210 supplied to each thruster 216 when fired. The amount of electric power 210 supplied to each thruster 216 is controlled by the IPC 208. The thrusters 216 are fired to perform a maneuver by the apparatus 102, such as station-keeping, electric orbit raising to transition from separation from a launch vehicle to a target orbit, or other maneuvers.

In accordance with an example, the apparatus 102 also includes control electronics, such as spacecraft control electronics (SCE) 218 in the example of FIG. 2. In accordance with the example shown in FIG. 2, the controller 202 is a component of the SCE 218. In other examples, the controller 202 is a separate component from the SCE 218. The SCE 218 is connected to the IPC 208 to control operation of the IPC 208 and distribution of electric power 210 to the components 211 of the apparatus 102.

In accordance with another embodiment, a battery 220 is mounted in the apparatus body 204 and configured to supply electric power 210 to components 211 of the apparatus 102. In one embodiment, the battery 220 is a battery pack. The battery 220 is charged by electric power 210 from the solar arrays 206 through the IPC 208. The IPC 208 controls charging of the battery 220 by the solar arrays 206. A state of charge (SOC) 222 of the battery 220 is monitored by the SCE 218. In one embodiment, the SCE 218 is configured to control the SOC 222 through the controller 202. Voltages 224 associated with the battery 220 are measured to determine the SOC 222 of the battery 220 at any particular time.

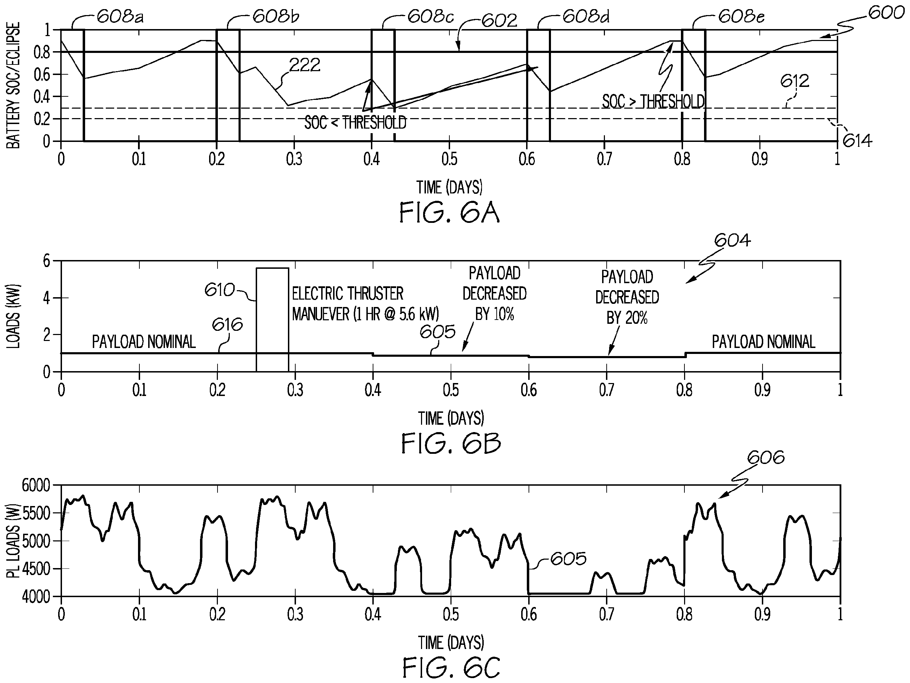

In accordance with an example, the SCE 218 transmits control signals 225 to the IPC 208 to control charging the battery 220 in response to at least the SOC 222 of the battery 220 to maintain the SOC 222 of the battery 220 proximate a preset threshold 602 (FIG. 6A) or within predetermined limits. Maintaining the SOC 222 of the battery 220 proximate the preset threshold 602 or within predetermined limits is also referred to as maintaining a balanced battery SOC 228 herein. In accordance with an example, the preset threshold 602 in FIG. 6A is about 80% of a full charge of the battery 220 or the battery being charged 100%. In accordance with another example a high fault limit 612 (FIG. 6A) and a low fault limit 614 of the SOC 222 of the battery 220 are set. A fault limit is a threshold value that initiates a fault response if a measured parameter exceeds the predefined threshold value. In the example in FIG. 6A, the high fault limit 612 of the SOC 222 of the battery 220 is set to about 25% of a 100% charge on the battery 220 and the low fault limit 614 is set to about 20% of the 100% charge on the battery 220. Different fault protections may be implemented depending upon the SOC 222 of the battery 220 falling below each fault limit 612 and 614. For example, additional components of the integrated payload array 226 are shut down in response to the SOC 222 falling below each lower fault limit 612 and 614.

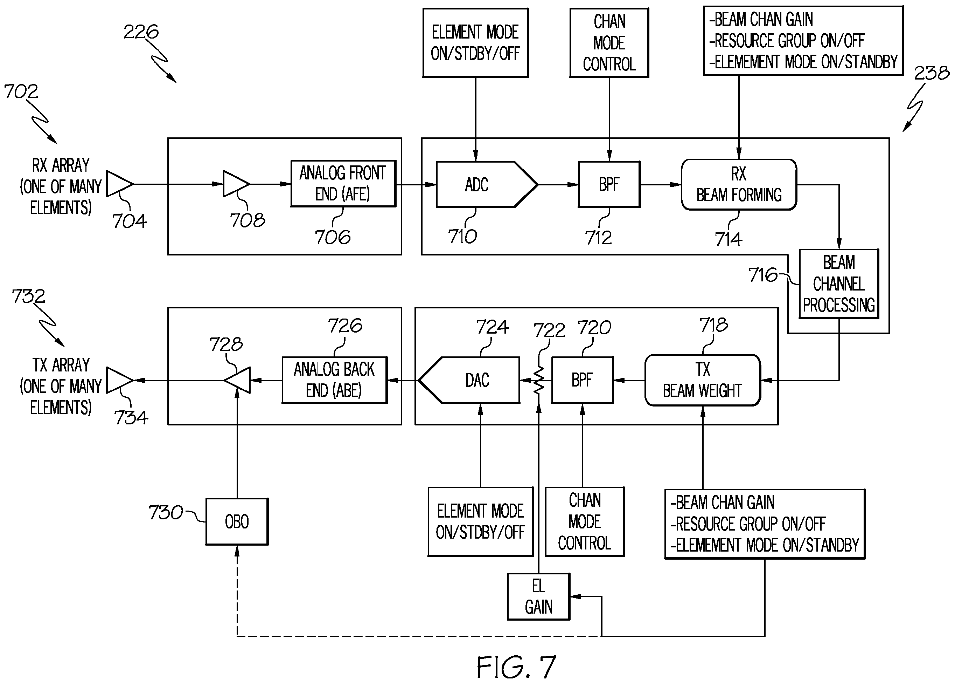

The apparatus 102, also includes an integrated payload array (IPA) 226. An example of an integrated payload array 226 will be described in more detail with reference to FIG. 7. The integrated payload array 226 is configured to transmit and receive communications signals 230. The integrated payload array 226 is configurable to perform any of the communications 106, 108, 112 and 114 described with reference to FIG. 1.

In accordance with an example, the controller 202 includes a processor 232. The controller 202 is configured to monitor the electric power measurement data 214 generated by the solar arrays 206 of the apparatus 102, to monitor the SOC 222 of the battery 220 and to autonomously control electric power consumption of the integrated payload array 226 in response to at least the SOC 222 of the battery 220 to maintain a balanced battery SOC 228 proximate a preset threshold 602 (FIG. 6A).

In accordance with a further example, the controller 202 is further configured to autonomously control electric power consumption of selected components 238 of the integrated payload array 226 in response to the solar arrays 206 receiving insufficient light to generate electric power 210, such in the case of an eclipse. An eclipse occurs when the apparatus 102 orbits around the earth and is in a position where the earth blocks some or all sun light from reaching the solar arrays 206.

In accordance with an example, one or more payload temperature sensors 234 are associated with the integrated payload array 226 to measure the temperature of the integrated payload array 226 and transmit temperature measurement data 236 of the integrated payload array 226 to the controller 202 of the SCE 218. The controller 202 is further configured to monitor the temperature measurement data 236 from the integrated payload array 226 and to autonomously control electric power consumption of selected components 238 of the integrated payload array 226 in response to the temperature measurement data 236 exceeding a preset temperature operating limit 240. Examples of the selected components 238 of the integrated payload array 226 that are autonomously controlled are described with reference to FIG. 7. As described in more detail with reference to the example in FIG. 7, the electric power consumption by the integrated payload array 226 is autonomously controlled by disabling operation of some selected component 238 and adjusting performance of other selected components 238 to control electric power consumption.

In accordance with an example, the apparatus 102 also includes a memory 242. In the example in FIG. 2, the memory 242 is a component of the SCE 218. In other examples, the memory 242 may be a separate component from the SCE 218. A mission plan 244 for the apparatus 102 is stored on the memory 242. The mission plan 244 includes management and communication task descriptions 246 which are performed by the integrated payload array 226. The management and communications task descriptions 246 include task parameters 248 that are used in performing the communications tasks by the integrated payload array 226. In accordance with an example, a task command message 250 including a task command 252 is received by the integrated payload array 226 and transmitted to the SCE 218 from mission operations 253. In accordance with an embodiment, mission operations 253 is a ground station, such as ground station 104 in FIG. 1. The task command 252 includes a bandwidth 254. Payload communications traffic 256 flowing through the integrated payload array 226 is controlled by the controller 202 of the SCE 218. The payload communications traffic 256 is controlled in response to at least one of the electric power measurement data 214 from the solar arrays 206, the SOC 222 of the battery 220, the temperature measurement data 236 from the integrated payload array 226 and the occupied bandwidth 254 as directed in the task command 252.

In accordance with another example, a task command 252 including payload mission task 258 is received by the integrated payload array 226 and transmitted to the SCE 218. The task command 252 is accepted by the SCE 218 in response to the state of charge 222 of the battery 220 being proximate the preset threshold 602 (FIG. 6A) and a priority 260 of the payload mission task 258 being equal to or exceeding a chosen priority value 259. The task command 252 is rejected by the SCE 218 in response to the state of charge 222 of the battery 220 being below the preset threshold 602 and the priority 260 of the payload mission task 258 being below the chosen priority value 259.

In accordance with another example, an alarm 262 is transmitted to mission operations 253 by the SCE 218 through the integrated payload array 226 in response to rejecting the task command 252 or a mission plan 244 of the apparatus 102 not satisfying the balanced battery SOC 228 or the preset temperature operating limit 240 of the integrated payload array 226.

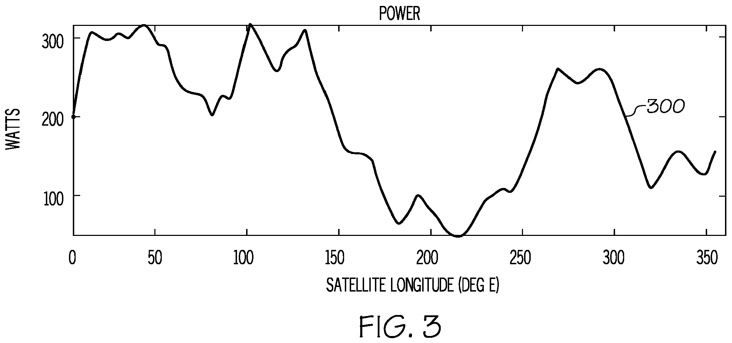

FIG. 3 is a graph of electric power consumption 300 illustrating an example of electric power consumption 300 by a payload, such as the integrated payload array 226, of an apparatus 102 as the apparatus 102 orbits the earth in accordance with an embodiment of the present disclosure. The horizontal axis is the longitudinal location of the apparatus 102 with respect to the earth in degrees. The vertical axis is electric power in watts. As illustrated by the graph, the electric power consumption 300 of the integrated payload array 226 (FIG. 2) is a function of longitude and varies according to the amount of payload communications traffic 256 caused or needed in a specific location as the apparatus 102 orbits the earth. The electric power consumption 300 and bandwidth 254 will increase when the apparatus 102 is over portions of the earth where communications demand is higher, such as heavily populated areas, and will decrease over portions of the earth with lower communications demand, such as less populated areas. Payload electric power consumption 300 is proportional to the amount of radio frequency (RF) output power which must provide a threshold RF power density per unit of bandwidth (Hertz (Hz)) at a ground receiver antenna 120 (FIG. 1). In the case where a beamforming technique is used, payload electric power is also proportional to the number of beams, as the total processed bandwidth is proportional to the number of processed beams. A balanced battery SOC 228 is achieved by reducing electric power consumption 300 of the integrated payload array 226 during periods of lower demand.

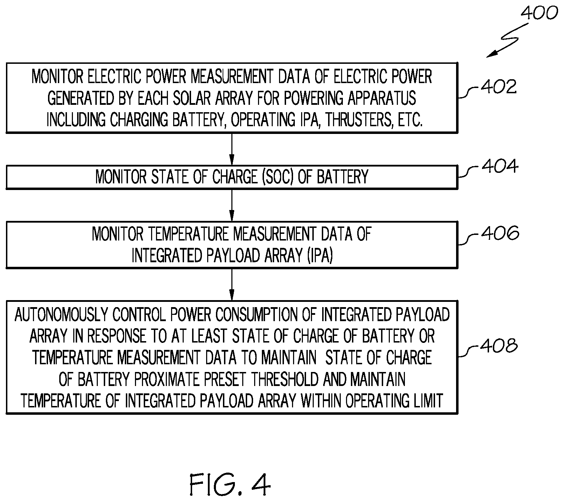

FIG. 4 is a flow chart of an example of a method 400 for autonomously controlling electric power consumption in accordance with an embodiment of the present disclosure. In accordance with an example, the method 400 is embodied in and performed by the controller 202 of the apparatus 102. In block 402, electric power measurement data 214 of electric power 210 being generated by a solar array 206 of the apparatus 102 is monitored. The solar array 206 is configured to at least charge a battery 220 and provide electrical power 210 to components 211 of the apparatus 102.

In block 404, a state of charge 222 of the battery 220 is monitored and in block 406, temperature measurement data 236 of an integrated payload array 226 is monitored.

In block 408, electric power consumption of the integrated payload array 226 is autonomously controlled in response to at least one of the state of charge 222 of the battery 220 and temperature measurement data 236. At least one of the state of charge 222 of the battery 220 is maintained proximate a preset threshold 602 (FIG. 6A) and a temperature of the integrated payload array 226 is maintained within preset temperature operating limit 240. The electric power consumption is autonomously controlled in that the apparatus 102 controls the electric power consumption without any external input or minimal external input from a ground station 104 or other sources. In accordance with an example, autonomously controlling electric power consumption of the integrated payload array 226 includes autonomously controlling electric power consumption of selected components 238 of the integrated payload array 226. Electric power consumption of the integrated payload array 226 is also autonomously controlled in response to the solar array 206 receiving insufficient light to generate electric power 210, such is the case of an eclipse.

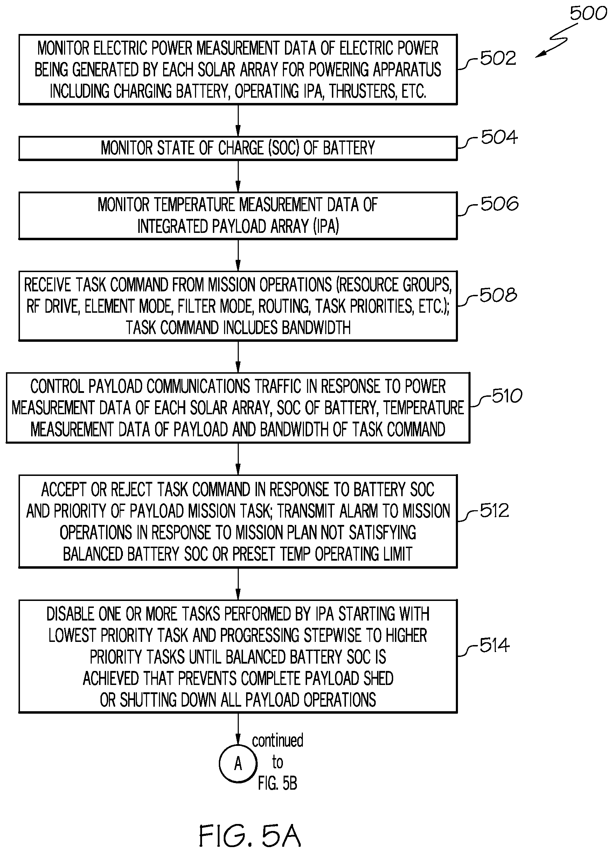

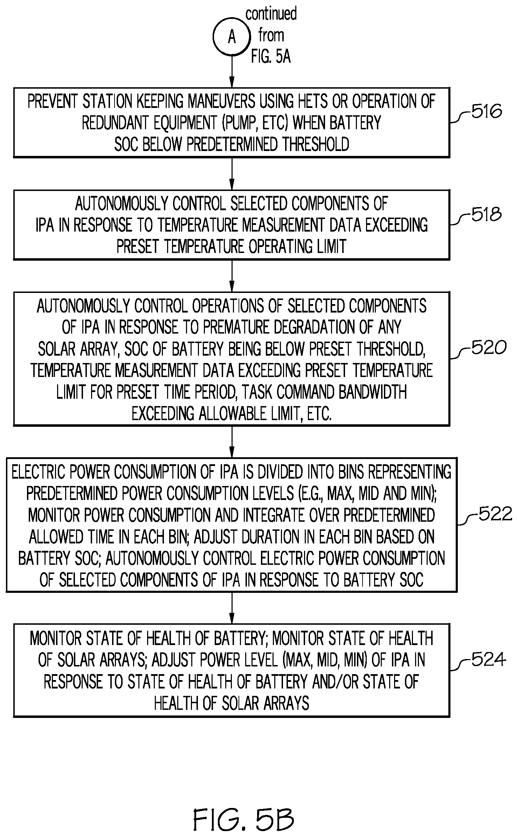

FIGS. 5A and 5B are a flow chart of an example of a method 500 for autonomously controlling electric power consumption in accordance with another embodiment of the present disclosure. In accordance with an example, the method 500 is embodied in and performed by the controller 202 of the apparatus 102. In block 502, electric power measurement data 214 of electric power 210 being generated by a solar array 206 of the apparatus 102 is monitored. The solar array 206 is configured to at least charge a battery 220 and provide electrical power 210 to components 211 of the apparatus 102.

In block 504, a state of charge 222 of the battery 220 is monitored. In block 506, temperature measurement data 236 of the integrated payload array 226 is monitored.

In block 508, a task command 252 is received from mission operations 253. The task command 252 includes a bandwidth 254. In accordance with an example, the task command 252 includes a payload mission task 258. In accordance with an example, the payload mission task 258 includes a communications operation (COMM OP) 264 that is to be performed by the integrated payload array 226. Examples of information that the task command 252 contains include resource groups, radio frequency (RF) drive, element mode and filter mode, routing and task priorities.

In block 510, payload communications traffic 256 of the integrated payload array 226 is controlled in response to the electric power measurement data 214 of the solar array 206, state of charge 222 of the battery 220, temperature measurement data 236 from the integrated payload array 226 and the configured bandwidth 254 of the task command 252.

In block 512, the task command 252 is accepted in response to the state of charge 222 of the battery 220 being proximate the preset threshold 602 (FIG. 6A) and a priority 260 of the payload mission task 258 being equal to or exceeding a chosen priority value 259. The task command 252 is rejected in response to the state of charge 222 of the battery 220 being below the preset threshold 602 and the priority 260 of the payload mission task 258 being below the chosen priority value 259. An alarm 262 is transmitted to mission operations 253 in response to the task command 252 being rejected or a mission plan 244 of the apparatus 102 not satisfying the balanced battery SOC 228 or the preset temperature operating limit 240 of the integrated payload array 226. In accordance with an example, the mission plan 244 includes a plurality of task commands 252 that cause electric power consumption 300 and elevated temperatures of the integrated payload array 226.

In block 514, one or more payload mission tasks 258 performed by the integrated payload array 226 are disabled to prevent complete payload shed or shutting down all payload operations. For example, payload mission tasks 258 are disabled starting with a lowest priority 260 payload mission task 258 and progressing to disable higher priority 260 payload mission tasks 258 until the balanced battery SOC 228 is achieved that prevents complete payload shed or shutting down all payload operations. For example, the SOC 222 of the battery 220 returns to proximate the preset threshold 602 or above the preset threshold 602 in FIG. 6A.

In block 516, a station-keeping maneuver, that includes using thrusters such as thrusters 216, is prevented when the balanced battery SOC 228 is below a preset threshold 602 (FIG. 6A). In accordance with an example, operation of redundant equipment of the apparatus 102 is also prevented when the balanced battery SOC 228 is below the preset threshold 602.

In block 518, selected components 238 of the integrated payload array 226 are autonomously controlled by the controller 202 to reduce electric power consumption by the integrated payload array 226 in response to the temperature measurement data 236 exceeding the preset temperature operating limit 240. Examples of selected components 238 of the integrated payload array 226 that are either autonomously disabled or controlled to reduce the electric power consumption will be described with reference to FIG. 7.

In block 520, operations of selected components 238 of the integrated payload array 226 are autonomously controlled in response to at least one of premature degradation of the solar array 206, the state of charge 222 of the battery 220 being below the preset threshold 602 (FIG. 6A), temperature measurement data 236 of the integrated payload array exceeding a preset temperature operating limit 240, and a task command bandwidth 254 exceeding an allowable limit 266.

In accordance with an example, in block 522, electric power consumption of the integrated payload array 226 is divided into a number of power consumption bins that each represent a predetermined power consumption level, for example, a Max power consumption bin, a Mid power consumption bin and a Min power consumption bin. The power consumption of the integrated payload array 226 is then monitored and integrated over a predetermined time period, for example, a 24 hour period. An amount of time the integrated payload array 226 spends at each power consumption bin over the 24 hour period is compared to the maximum allowable time in each power consumption bin. The amount of time in each power consumption bin is controlled in response to the state of charge 222 of the battery 220. If the amount of time in a particular power consumption bin exceeds its allotment over the 24 hour period, the selected components 238 in the integrated payload array 226 are controlled to prevent the integrated payload array 226 from entering that power consumption bin for the remainder of the 24 hour period.

In block 524, a state of health of the battery 220 and a state of health of the solar arrays 206 are monitored. Electric power consumption by the integrated payload array 226 is controlled in response to at least one of the state of health of the battery 220 and the state of health of the solar arrays 206. In accordance with an example, monitoring the state of health of the battery 220 is determined by monitoring the state of charge 222 of the battery 220 and an amount of charge the battery 220 is able to hold. The amount of charge the battery 220 is able to hold will gradually decrease over time because the battery's ability to hold a charge is reduced with age and over multiple charging cycles. Monitoring the state of health of the solar arrays 206 is determined by monitoring the amount of electric power 210 generated by the solar arrays 206 which will decrease over time as the solar arrays 206 degrade and become less efficient.

FIG. 6A is a graph 600 of an example of monitoring a state of charge (SOC) 222 of a battery 220 of an apparatus 102 in accordance with an embodiment of the present disclosure. The horizontal axis of FIG. 6A is time in days. The vertical axis of FIG. 6A is SOC 222 of the battery 220 in percentage of charge of the battery 220. FIG. 6B is a graph 604 of an example of monitoring electric power consumption 605 by the apparatus 102 in accordance with an embodiment of the present disclosure. The horizontal axis of FIG. 6B is time in days. The vertical axis of FIG. 6B is electric power consumption 605 in kilowatts (KW). FIG. 6C is a graph 606 of an example of monitoring electric power consumption 605 by a payload (PL) such as the integrated payload array 226 of the apparatus 102 in accordance with an embodiment of the present disclosure. The horizontal axis in FIG. 6C is time in days. The vertical axis in FIG. 6C is electric power consumption 605 by a payload, such as the integrated payload array 226, in watts (W). By comparing the graphs 600, 604 and 606, the state of charge 222 of the battery 220 decreases in response to the integrated payload array 226 consuming electric power or when the thrusters, such as thrusters 216, perform a thruster maneuver. As shown in FIG. 6A, the state of charge 222 of the battery 220 decreased during each eclipse 608a-608e and recharges when the solar arrays 206 of the apparatus 102 are receiving sunlight between eclipses except when there is electric power consumption by other components of the apparatus 102, such as the thrusters 216. For example, the state of charge 222 of the battery 220 is further decreased after a thruster maneuver 610 in FIG. 6B after the eclipse 608b at time 0.2 days. As illustrated in FIG. 6A, when the state of charge 222 of the battery 220 is less than the preset threshold 602, the integrated payload array 226 power consumption is autonomously controlled by decreasing the electric power consumption by the integrated payload array 226. For example, a reduction of power consumption by 10% compared to a payload nominal value 616 in FIG. 6B is used to prevent payload shedding or complete shutdown of the integrated payload array 226 . In the example illustrated in FIGS. 6A and 6B, the electric power consumption 605 by the integrated payload array 226 is further decreased by 20% of the nominal value 616 during the eclipse 608d at time 0.6 days. The electric power consumption 605 of the integrated payload array 226 returns to the nominal value 616 when the state of charge 222 of the battery 220 exceeds the preset threshold 602 just before eclipse 608e in FIG. 6A.

FIG. 7 is a block schematic diagram of an example of the integrated payload array 226 in FIG. 2 including selected components 238 that are selectively controlled for autonomously controlling electric power consumption 605 in accordance with an embodiment of the present disclosure. As previously described, electric power consumption 605 by the integrated payload array 226 is autonomously controlled by autonomously controlling electric power consumption 605 by selected components 238 of the integrated payload array 226. The integrated payload array 226 includes a receive (Rx) antenna array 702. The Rx antenna array 702 includes multiple antenna elements 704. Only a single antenna element 704 is shown in FIG. 7 for clarity. The receive antenna array 702 is operatively coupled to an analog front end 706 by a low noise amplifier (LNA) 708.

The analog front end 706 is operatively connected to an analog-to-digital converter (ADC) 710. In accordance with an example, the ADC 710 operates according to one of three element modes: ON, Standby or OFF. Each of these element modes will consume a different amount of electric power. For example, the ON mode will consume the most electric power, the OFF mode will not consume any electric power and the standby mode will consume a much smaller amount of electric power compared to the ON mode. Electric power consumption by the ADC 710 is autonomously controllable by selecting one of three element modes.

The ADC 710 is operatively connected to a transmit band pass filter (BPF) 712. The transmit BPF 712 is selectively set in one of a plurality of channel modes, for example, a channel mode 1 or a channel mode 2, to autonomously control power consumption by the integrated payload array 226.

The transmit BPF 712 is operatively connected to a receive (Rx) beam forming element 714. The electric power consumption by the Rx beam forming element 714 is autonomously controllable by alternatively selecting element modes ON or Standby. The electric power consumption by the Rx beam forming element 714 is also autonomously controllable by controlling the beam channel gain of the Rx beam forming element 714 and turning a resource group of the Rx beam forming element 714 on or off.

The Rx beam forming element 714 is operatively connected to a beam channel processing element 716. The beam channel processing element 716 is operatively connected to a transmit (Tx) beam weight element 718. Electric power consumption by the Tx beam weight element 718 is controllable by adjusting the beam channel gain, turning on or off a resource group of the Tx beam weight element 718 and selecting an element mode ON or Standby.

The Tx beam weight element 718 is operatively connected to a receive band pass filter (BPF) 720. Electric power consumption by the receive BPF 720 is controlled by selecting one of a plurality of channel modes, for example, a channel mode 1 or a channel mode 2 which respectively consume different amounts of electric power.

The receive BPF 720 is operatively connected to an adjustable gain element 722. For example, the adjustable gain element 722 is any controllable variable gain device, such as a potentiometer, etc. Electric power consumption by the adjustable gain element 722 is autonomously controlled by adjusting the gain of the element 722.

The adjustable gain element 722 is operatively connected to a digital-to-analog converter (DAC) 724. Electric power consumption by the DAC 724 is controlled by selecting one of element modes ON, Standby or Off.

The DAC 724 is operatively connected to an analog back end (ABE) 726 and the ABE 726 is operatively connected to a high power amplifier (HPA) 728. Electric power consumption by the HPA 728 is controlled by adjusting the output back off (OBO) 730 of the HPA 278. The HPA 728 is operatively connected to a transmit (Tx) array 732. The Tx array 732 includes a multiplicity of antenna elements 734. Only a single antenna element 734 is shown in FIG. 7 for clarity.

In an example, a method for autonomous control of electric power consumption by an apparatus is provided, the example method comprising: monitoring electric power measurement data of electric power being generated by a solar array of the apparatus, the solar array being configured to at least charge a battery and provide electrical power to components of the apparatus; monitoring a state of charge of the battery; monitoring temperature measurement data from an integrated payload array; and autonomously controlling electric power consumption of the integrated payload array in response to the state of charge of the battery and to the temperature measurement data, the state of charge of the battery being maintained proximate a preset threshold and the temperature of the integrated payload array being maintained below a preset temperature operating limit.

Some example methods further comprise autonomously controlling electric power consumption of the integrated payload array and thrusters in response to the solar array receiving insufficient light to generate electric power.

In some examples, the controller of an example apparatus according to this disclosure is configured to autonomously control electric power consumption of selected components of the integrated payload array in response to a parameter related to the integrated payload array, wherein the parameter related to the integrated payload array comprises temperature of the integrated payload array, the temperature being sensed by a temperature sensor associated with the integrated payload array, the controller being configured to monitor temperature measurement data from the integrated payload array and to autonomously control electric power consumption of selected components of the integrated payload array in response to the temperature measurement data exceeding a preset temperature operating limit.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of embodiments of the disclosure. As used herein, the singular forms "a", "an" and "the" are intended to include the plural forms as well, unless the context clearly indicates otherwise. It will be further understood that the terms "include," "includes," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present embodiments has been presented for purposes of illustration and description, but is not intended to be exhaustive or limited to embodiments in the form disclosed. Many modifications and variations will be apparent to those of ordinary skill in the art without departing from the scope of embodiments.

The invention is defined by the scope of the independent claims. Preferred embodiments of the invention are defined by the dependent claims.

## Claims

1. A method (400, 500) for autonomous control of electric power (210) consumption by an apparatus (200), comprising:
monitoring (402, 502) electric power measurement data (214) of electric power (210) being generated by a solar array (206a, 206b) of the apparatus (200), the solar array (206a, 206b) being configured for at least charging a battery (220) and providing electrical power (210) to components of the apparatus (200);
monitoring (404, 504) a state of charge (222) of the battery (220);
autonomously controlling (408, 520) electric power (210) consumption of an integrated payload array of the apparatus (226, 700) in response to at least the state of charge (222) of the battery (220), the state of charge (222) of the battery (220) being maintained above a preset threshold (602);
and the method (400, 500) **characterized in** monitoring (506) temperature measurement data (236) of temperature of the integrated payload array (700); and
autonomously controlling (518) electric power (210) consumption of selected components (238) of the integrated payload array (700) in response to the temperature measurement data (236) exceeding a preset temperature operating limit (240).

2. The method (400, 500) of claim 1, wherein autonomously controlling (408) electric power (210) consumption of the integrated payload array (700) comprises autonomously controlling electric power (210) consumption of selected components (238) of the integrated payload array (700).

3. The method (400, 500) of any one of claims 1-2, wherein the autonomously controlling electric power (210) consumption of the integrated payload array (226, 700) is also in response to the solar array (206a, 206b) receiving insufficient light to generate electric power (210).

4. The method (400, 500) of any one of claims 1-3, further comprising:
receiving (508) a task command (252) comprising a frequency bandwidth (254); and
controlling (510) payload communications traffic (256) of the integrated payload array (226, 700) in response to at least one of the electric power measurement data (214) of the solar array (206a, 206b), state of charge (222) of the battery (220), temperature measurement data (236) from the integrated payload array (226, 700) and the frequency bandwidth (254) of the task command (252).

5. The method (400, 500) of any one of claims 1-4, further comprising:
receiving (508) a task command (252) comprising a payload mission task (258);
accepting (512) the task command (252) in response to the state of charge (222) of the battery (220) being above the preset threshold (602).

6. The method (400, 500) of any one of claims 1-5, further comprising:
receiving (508) a task command (252) comprising a payload mission task (258);
rejecting (512) the task command (252) in response to the state of charge (222) of the battery (220) being below the preset threshold (602) and/or a priority (260) of the payload mission task (258) being below a chosen priority value (259); and
transmitting (512) an alarm to a ground station (104) in response to rejecting the task command (252).

7. The method (400, 500) of any one of claims 1-6, further comprising disabling (514) one or more payload mission tasks (258) performed by the integrated payload array (226) until the state of charge (222) of the battery (220) is achieved that prevents shutting down all payload (226) operations.

8. The method according to claim 7, wherein disabling the one or more payload mission tasks performed by the integrated payload array comprises disabling a lowest priority payload mission task and progressing to disable higher priority payload mission tasks until the state of charge of the battery is achieved that prevents shutting down all payload operations.

9. The method (400, 500) of any one of claims 1-8, further comprising preventing (516) a station-keeping maneuver, that comprises using thrusters (216), when the state of charge (222) of the battery (138) is below the preset threshold (602).

10. The method of any one of claims 1-9, further comprising preventing (516) operation of redundant equipment when the state of charge (222) of the battery (220) is below the preset threshold (602).

11. The method (400, 500) of any one of claims 1-10, further comprising autonomously controlling (520) operation of selected components (238) of the integrated payload array (226, 700) in response to at least one of premature degradation of the solar array (206a, 206b), the state of charge of the battery (220) being below the preset threshold (602), temperature measurement data (236) of the integrated payload array (226, 700) exceeding a preset temperature operating limit (240), and a task command (252) frequency bandwidth (254) exceeding an allowable limit.

12. The method (400, 500) of any one of claims 1-11, further comprising:
monitoring (524) a state of health of the battery (220);
monitoring (524) a state of health of the solar array (206a, 206b); and
controlling (524) electric power consumption of the integrated payload array (226) in response to the state of health of the battery (220); and
controlling (224) the electric power consumption of the integrated payload array (226) in response to the state of health of the solar array (206a, 206b).

13. An apparatus (200) for autonomous control of electric power (210) consumption, comprising:
an apparatus body (204);
a battery (220), wherein the battery (220) is configured to supply electric power (210) to components of the apparatus (200);
a solar array (206a, 206b) attached to the apparatus body (204), the solar array (206a, 206b) being configured to at least charge the battery (220) and provide electrical power (210) to the components of the apparatus (200);
an integrated payload array (226, 700) configured to transmit and receive communications signals (230); and
a controller (202), the controller (202) comprising a processor (232), the controller (202) is configured to monitor electric power measurement data (214) of electric power generated by the solar array (206a, 206b), to monitor a state of charge of the battery (220), to autonomously control electric power (210) consumption of the integrated payload array (226, 700) in response to at least the state of charge (222) of the battery (220), the state of charge (222) of the battery (220) being maintained above a preset threshold (602), and
wherein the controller (202) is **characterized in that** it is further configured to monitor (506) temperature measurement data (236) of temperature of the integrated payload array (700), and to autonomously control (518) electric power (210) consumption of selected components (238) of the integrated payload array (700) in response to the temperature measurement data (236) exceeding a preset temperature operating limit (240).

14. The apparatus (200) of claim 13, wherein the controller (202) is further configured to autonomously control electric power (210) consumption of selected components (238) of the integrated payload array (226, 700) in response to the solar array (206a, 206b) receiving insufficient light to generate electric power.

15. The apparatus (200) of any one of claims 13-14, wherein the controller (202) is further configured to autonomously control electric power (210) consumption of selected components (238) of the integrated payload array (226, 700) in response to a parameter related to the integrated payload array (226, 700).

## Patentansprüche

1. Verfahren (400, 500) zur autonomen Steuerung eines Verbrauchs von elektrischer Energie (210) durch eine Vorrichtung (200), aufweisend:
Überwachen (402, 502) von Messdaten (214) elektrischer Energie einer von einer Solaranlage (206a, 206b) der Vorrichtung (200) erzeugten elektrischen Energie (210), wobei die Solaranlage (206a, 206b) zumindest zum Laden einer Batterie (220) und Versorgen von Komponenten der Vorrichtung (200) mit elektrischer Energie (210) konfiguriert ist;
Überwachen (404, 504) eines Ladungszustands (222) der Batterie (220);
autonomes Steuern (408, 520) eines Verbrauchs elektrischer Energie (210) einer integrierten Nutzlastanlage der Vorrichtung (226, 700) als Antwort auf zumindest den Ladungszustand (222) der Batterie (220), wobei der Ladungszustand (222) der Batterie (220) oberhalb einer vorgegebenen Schwelle (602) gehalten wird;
und wobei das Verfahren (400, 500) **gekennzeichnet ist durch**
Überwachen (506) von Temperaturmessdaten (236) einer Temperatur der integrierten Nutzlastanlage (700); und
autonomes Steuern (518) eines Verbrauchs elektrischer Energie (210) von ausgewählten Komponenten (238) der integrierten Nutzlastanlage (700) als Antwort darauf, dass die Temperaturmessdaten (236) eine vorgegebene Temperaturbetriebsgrenze (240) überschreiten.

2. Verfahren (400, 500) nach Anspruch 1, wobei autonomes Steuern (408, 520) des Verbrauchs elektrischer Energie (210) der integrierten Nutzlastanlage (700) aufweist: autonomes Steuern (408, 520) eines Verbrauchs elektrischer Energie (210) von ausgewählten Komponenten (238) der integrierten Nutzlastanlage (700).

3. Verfahren (400, 500) nach einem der Ansprüche 1 bis 2, wobei das autonome Steuern des Verbrauchs elektrischer Energie (210) der integrierten Nutzlastanlage (226, 700) auch eine Antwort darauf ist, dass die Solaranlage (206a, 206b) nicht genügend Licht empfängt, um elektrische Energie (210) zu erzeugen.

4. Verfahren (400, 500) nach einem der Ansprüche 1 bis 3, ferner aufweisend:
Empfangen (508) einer Aufgabenanweisung (252), die eine Frequenzbandbreite (254) aufweist; und
Steuern (510) eines Nutzlastkommunikationsverkehrs (256) der integrierten Nutzlastanlage (226, 700) als Antwort auf die Messdaten (214) elektrischer Energie der Solaranlage (206a, 206b) und/oder einen Ladungszustand (222) der Batterie (220) und/oder Temperaturmessdaten (236) aus der integrierten Nutzlastanlage (226, 700) und/oder die Bandbreite (254) der Aufgabenanweisung (252).

5. Verfahren (400, 500) nach einem der Ansprüche 1 bis 4, ferner aufweisend:
Empfangen (508) einer Aufgabenanweisung (252), die eine Nutzlastauftragsaufgabe (258) aufweist;
Annehmen (512) der Aufgabenanweisung (252) als Antwort darauf, dass der Ladungszustand (222) der Batterie (220) oberhalb der vorgegebenen Schwelle (602) ist.

6. Verfahren (400, 500) nach einem der Ansprüche 1 bis 5, ferner aufweisend:
Empfangen (508) einer Aufgabenanweisung (252), die eine Nutzlastauftragsaufgabe (258) aufweist;
Ablehnen (512) der Aufgabenanweisung (252) als Antwort darauf, dass der Ladungszustand (222) der Batterie (220) unterhalb der vorgegebenen Schwelle (602) ist und/oder eine Priorität (260) der Nutzlastauftragsaufgabe (258) unterhalb eines gewählten Prioritätswerts (259) ist; und
Senden (512) eines Alarms zu einer Bodenstation (104) als Antwort auf Ablehnen der Aufgabenanweisung (252).

7. Verfahren (400, 500) nach einem der Ansprüche 1 bis 6, ferner aufweisend Deaktivieren (514) einer oder mehrerer von der integrierten Nutzlastanlage (226) durchgeführter Nutzlastauftragsaufgaben (258), bis derjenige Ladungszustand (222) der Batterie (220) erreicht ist, der ein Abschalten aller Betriebe der Nutzlast (226) verhindert.

8. Verfahren nach Anspruch 7, wobei Deaktivieren einer oder mehrerer von der integrierten Nutzlastanlage durchgeführter Nutzlastauftragsaufgaben aufweist: Deaktivieren einer Nutzlastauftragsaufgabe niedrigster Priorität und fortschreitendes Deaktivieren von Nutzlastauftragsaufgaben höherer Priorität, bis derjenige Ladungszustand der Batterie erreicht ist, der ein Abschalten aller Betriebe der Nutzlast verhindert.

9. Verfahren (400, 500) nach einem der Ansprüche 1 bis 8, ferner aufweisend Verhindern (516) eines stationshaltenden Manövers, das Verwenden von Schubdüsen (216) aufweist, wenn der Ladungszustand (222) der Batterie (138) unterhalb der vorgegebenen Schwelle (602) ist.

10. Verfahren nach einem der Ansprüche 1 bis 9, ferner aufweisend
Verhindern (516) eines Betriebs von redundanten Gerätschaften, wenn der Ladungszustand (222) der Batterie (220) unterhalb der vorgegebenen Schwelle (602) ist.

11. Verfahren (400, 500) nach einem der Ansprüche 1 bis 10, ferner aufweisend autonomes Steuern (520) eines Betriebs von ausgewählten Komponenten (238) der integrierten Nutzlastanlage (226, 700) als Antwort auf eine vorzeitige Verschlechterung der Solaranlage (206a, 206b) und/oder einen Ladungszustand der Batterie (220), der unterhalb der vorgegebenen Schwelle (602) ist, und/oder Temperaturmessdaten (236) der integrierten Nutzlastanlage (226, 700), die eine vorgegebene Temperaturbetriebsgrenze (240) überschreiten, und/oder eine Frequenzbandbreite (254) einer Aufgabenanweisung (252), die eine zulässige Grenze überschreitet.

12. Verfahren (400, 500) nach einem der Ansprüche 1 bis 11, ferner aufweisend:
Überwachen (524) eines Gesundheitszustands der Batterie (220);
Überwachen (524) eines Gesundheitszustands der Solaranlage (206a, 206b); und
Steuern (524) eines elektrischen Energieverbrauchs der integrierten Nutzlastanlage (226) als Antwort auf den Gesundheitszustand der Batterie (220); und
Steuern (224) des elektrischen Energieverbrauchs der integrierten Nutzlastanlage (226) als Antwort auf den Gesundheitszustand der Solaranlage (206a, 206b).

13. Vorrichtung (200) zur autonomen Steuerung eines Verbrauchs von elektrischer Energie (210), aufweisend:
einen Vorrichtungskörper (204);
eine Batterie (220), wobei die Batterie (220) konfiguriert ist, um Komponenten der Vorrichtung (200) mit elektrischer Energie (210) zu versorgen;
eine an dem Vorrichtungskörper (204) angebrachte Solaranlage (206a, 206b), wobei die Solaranlage (206a, 206b) konfiguriert ist, um zumindest die Batterie (220) zu laden und die Komponenten der Vorrichtung (200) mit elektrischer Energie (210) zu versorgen;
eine integrierte Nutzlastanlage (226, 700), die konfiguriert ist, um Kommunikationssignale (230) zu senden und zu empfangen; und
eine Steuerung (202), wobei die Steuerung (202) einen Prozessor (232) aufweist, die Steuerung (202) konfiguriert ist, um
Messdaten (214) elektrischer Energie einer von der Solaranlage (206a, 206b) erzeugten elektrischen Energie zu überwachen,
einen Ladungszustand der Batterie (220) zu überwachen,
einen Verbrauch elektrischer Energie (210) der integrierten Nutzlastanlage (226, 700) als Antwort auf zumindest den Ladungszustand (222) der Batterie (220) autonom zu steuern, wobei der Ladungszustand (222) der Batterie (220) oberhalb einer vorgegebenen Schwelle (602) gehalten wird, und
wobei die Steuerung (202) **dadurch gekennzeichnet ist, dass** sie ferner konfiguriert ist, um
Temperaturmessdaten (236) einer Temperatur der integrierten Nutzlastanlage (700) zu überwachen (506), und
einen Verbrauch elektrischer Energie (210) von ausgewählten Komponenten (238) der integrierten Nutzlastanlage (700) als Antwort darauf, dass die Temperaturmessdaten (236) eine vorgegebene Temperaturbetriebsgrenze (240) überschreiten, autonom zu steuern (518).

14. Vorrichtung (200) nach Anspruch 13, wobei die Steuerung (202) ferner konfiguriert ist, um
einen Verbrauch elektrischer Energie (210) von ausgewählten Komponenten (238) der integrierten Nutzlastanlage (226, 700) als Antwort darauf, dass die Solaranlage (206a, 206b) nicht genügend Licht empfängt, um elektrische Energie zu erzeugen, autonom zu steuern.

15. Vorrichtung (200) nach einem der Ansprüche 13 bis 14, wobei die Steuerung (202) ferner konfiguriert ist, um einen Verbrauch elektrischer Energie (210) von ausgewählten Komponenten (238) der integrierten Nutzlastanlage (226, 700) als Antwort auf einen mit der integrierten Nutzlastanlage (226, 700) in Beziehung stehenden Parameter autonom zu steuern.

## Revendications

1. Procédé (400, 500) de régulation autonome de la consommation d'énergie électrique (210) par un appareil (200), comprenant :
la surveillance (402, 502) de données de mesure d'énergie électrique (214) de l'énergie électrique (210) étant générée par un réseau de panneaux photovoltaïques (206a, 206b) de l'appareil (200), le réseau de panneaux photovoltaïques (206a, 206b) étant configuré pour au moins charger une batterie (220) et fournir de l'énergie électrique (210) à des composants de l'appareil (200) ;
la surveillance (404, 504) d'un état de charge (222) de la batterie (220) ;
la régulation autonome (408, 520) de la consommation d'énergie électrique (210) d'un ensemble de charges utiles intégré de l'appareil (226, 700) en réponse à au moins l'état de charge (222) de la batterie (220), l'état de charge (222) de la batterie (220) étant maintenu au-dessus d'un seuil prédéfini (602) ;
et le procédé (400, 500) étant **caractérisé par**
la surveillance (506) de données de mesure de température (236) de la température de l'ensemble de charges utiles intégré (700) ; et
la régulation autonome (518) de la consommation d'énergie électrique (210) de composants sélectionnés (238) de l'ensemble de charges utiles intégré (700) en réponse aux données de mesure de température (236) dépassant une limite opérationnelle de température prédéfinie (240).

2. Procédé (400, 500) selon la revendication 1, dans lequel la régulation autonome (408) de la consommation d'énergie électrique (210) de l'ensemble de charges utiles intégré (700) comprend la régulation autonome de la consommation d'énergie électrique (210) de composants sélectionnés (238) de l'ensemble de charges utiles intégré (700).

3. Procédé (400, 500) selon l'une quelconque des revendications 1 à 2, dans lequel la régulation autonome de la consommation d'énergie électrique (210) de l'ensemble de charges utiles intégré (226, 700) s'effectue également en réponse au réseau de panneaux photovoltaïques (206a, 206b) recevant suffisamment de lumière pour générer de l'énergie électrique (210).

4. Procédé (400, 500) selon l'une quelconque des revendications 1 à 3 comprenant en outre :
la réception (508) d'une commande de tâche (252) comprenant une largeur de bande de fréquences (254) ; et
la régulation (510) d'un trafic de communication de charges utiles (256) de l'ensemble de charges utiles intégré (226, 700) en réponse à au moins un élément parmi les données de mesure d'énergie électrique (214) du réseau de panneaux photovoltaïques (206a, 206b), l'état de charge (222) de la batterie (220), les données de mesure de température (236) provenant de l'ensemble de charges utiles intégré (226, 700) et la largeur de bande de fréquences (254) de la commande de tâche (252).

5. Procédé (400, 500) selon l'une quelconque des revendications 1 à 4, comprenant en outre :
la réception (508) d'une commande de tâche (252) comprenant une tâche liée à une mission de charge utile (258) ;
l'acceptation (512) de la commande de tâche (252) en réponse à l'état de charge (222) de la batterie (220) étant au-dessus du seuil prédéfini (602).

6. Procédé (400, 500) selon l'une quelconque des revendications 1 à 5, comprenant en outre :
la réception (508) d'une commande de tâche (252) comprenant une tâche liée à une mission de charge utile (258) ;
le rejet (512) de la commande de tâche (252) en réponse à l'état de charge (222) de la batterie (220) étant au-dessous du seuil prédéfini (602) et/ou à une priorité (260) de la tâche liée à une mission de charge utile (258) étant au-dessous d'une valeur de priorité choisie (259) ; et
l'émission (512) d'une alarme à une station au sol (104) en réponse au rejet de la commande de tâche (252).

7. Procédé (400, 500) selon l'une quelconque des revendications 1 à 6, comprenant en outre l'inactivation (514) d'une ou plusieurs tâches liées à une mission de charge utile (258) effectuées par l'ensemble de charges utiles intégré (226) jusqu'à ce que l'état de charge (222) de la batterie (220) soit atteint, ce qui empêche l'interruption de toutes les opérations de charges utiles (226).

8. Procédé selon la revendication 7, dans lequel l'inactivation des une ou plusieurs tâches liées à une mission de charges utiles effectuées par l'ensemble de charges utiles intégré comprend l'inactivation d'une tâche liée à une mission de charges utiles de priorité la plus basse et l'inactivation progressive des tâches liées à une mission de charges utiles de priorité supérieure jusqu'à ce que l'état de charge de la batterie soit atteint qui empêche l'interruption de toutes les opérations de charges utiles.

9. Procédé (400, 500) selon l'une quelconque des revendications 1 à 8, comprenant en outre le fait d'empêcher (516) une manoeuvre de maintien en position, qui comprend l'utilisation de propulseurs (216), quand l'état de charge (222) de la batterie (138) est au-dessous du seuil prédéfini (602).

10. Procédé selon l'une quelconque des revendications 1 à 9, comprenant en outre le fait d'empêcher (516) le fonctionnement d'un équipement redondant quand l'état de charge (222) de la batterie (220) est au-dessous du seuil prédéfini (602).

11. Procédé (400, 500) selon l'une quelconque des revendications 1 à 10, comprenant en outre la régulation autonome (520) du fonctionnement de composants sélectionnés (238) de l'ensemble de charges utiles intégré (226, 700) en réponse à au moins un élément parmi la dégradation prématurée du réseau de panneaux de photovoltaïques (206a, 206b), l'état de charge de la batterie (220) étant au-dessous du seuil prédéfini (602), les données de mesure de température (236) de l'ensemble de charges utiles intégré (226, 700) dépassant une limite opérationnelle de température prédéfinie (240), et une largeur de bande de fréquences (254) de commande de tâche (252) dépassant une limite admissible.

12. Procédé (400, 500) selon l'une quelconque des revendications 1 à 11, comprenant en outre :
la surveillance (524) d'un état d'intégrité de la batterie (220) ;
la surveillance (524) d'un état d'intégrité du réseau de panneaux photovoltaïques (206a, 206b) ; et
la régulation (524) de la consommation d'énergie électrique de l'ensemble de charges utiles intégré (226) en réponse à l'état d'intégrité de la batterie (220) ; et
la régulation (224) de la consommation d'énergie électrique de l'ensemble de charges utiles intégré (226) en réponse à l'état d'intégrité du réseau de panneaux photovoltaïques (206a, 206b).

13. Appareil (200) pour réguler de manière autonome la consommation d'énergie électrique (210), comprenant :
un corps d'appareil (204) ;
une batterie (220), dans lequel la batterie (220) est configurée pour alimenter en énergie électrique (210) des composants de l'appareil (200) ;
un réseau de panneaux photovoltaïques (206a, 206b) fixé au corps d'appareil (204), le réseau de panneaux photovoltaïques (206a, 206b) étant configuré pour au moins charger la batterie (220) et alimenter en énergie électrique (210) les composants de l'appareil (200) ;
un ensemble de charges utiles intégré (226, 700) configuré pour émettre et recevoir des signaux de communication (230) ; et
un dispositif de contrôle (202), le dispositif de contrôle (202) comprenant un processeur (232), le dispositif de contrôle (202) étant configuré pour surveiller des données de mesure d'énergie électrique (214) de l'énergie électrique générée par le réseau de panneaux photovoltaïques (206a, 206b), pour surveiller un état de charge de la batterie (220), pour réguler de manière autonome la consommation d'énergie électrique (210) de l'ensemble de charges utiles intégré (226, 700) en réponse à au moins l'état de charge (222) de la batterie (220), l'état de charge (222) de la batterie (220) étant maintenu au-dessus d'un seuil prédéfini (602), et
dans lequel le dispositif de contrôle (202) est **caractérisé en ce qu'**il est en outre configuré pour surveiller (506) des données de mesure de température (236) de la température de l'ensemble de charges utiles intégré (700), et pour réguler de manière autonome (518) la consommation d'énergie électrique (210) de composants sélectionnés (238) de l'ensemble de charges utiles intégré (700) en réponse aux données de mesure de température (236) dépassant une limite opérationnelle de température prédéfinie (240).

14. Appareil (200) selon la revendication 13, dans lequel le dispositif de contrôle (202) est en outre configuré pour réguler de manière autonome la consommation d'énergie électrique (210) de composants sélectionnés (238) de l'ensemble de charges utiles intégré (226, 700) en réponse au réseau de panneaux photovoltaïques (206a, 206b) recevant une lumière insuffisante pour générer de l'énergie électrique.

15. Appareil (200) selon l'une quelconque des revendications 13 à 14, dans lequel le dispositif de contrôle (202) est en outre configuré pour réguler de manière autonome la consommation d'énergie électrique (210) de composants sélectionnés (238) de l'ensemble de charges utiles intégré (226, 700) en réponse à un paramètre lié à l'ensemble de charges utiles intégré (226, 700).
